# FASCICULE DE BREVET EUROPEEN

(11) **EP 1 302 659 B1**
(45) Date de publication et mention de la délivrance du brevet: **05.04.2006**
(21) Numéro de dépôt: 03000860.1
(22) Date de dépôt: 17.07.1997
(51) Int. Cl.: H02P 23/00, H02P 27/05

(54) **Procédé de commande d'une éolienne**
Regelverfahren für eine Windmühle
Control method for a windmill

(30) Priorité: 26.07.1996 FR 9609450
(43) Date de publication de la demande: 16.04.2003
(62) Demande divisionnaire de: 97401722.0
(73) Titulaire: ALSTOM Power Conversion GmbH, 12277 Berlin (DE)
(72) Inventeur: Morel, Laurent, 69100 Villeurbanne (FR); Mirzaian, Abdullah, 90300 Valdoie (FR); Godfroid, Henri, 90350 Evette-Salbert (FR)
(74) Mandataire: Dreiss, Fuhlendorf, Steimle & Becker

(56) Documents cités:
- EP-A- 0 361 292
- GB-A- 2 054 975

## Description

L'invention concerne une machine électrique et un procédé de commande d'une machine électrique fourniture d'énergie à un réseau électrique quand la machine est couplée à une éolienne.

La description de l'invention est basée sur une machine électrique tournante à double alimentation. Ces machines à double alimentation ayant un fonctionnement réversible, la présente description s'applique aussi pour la fourniture d'énergie au réseau électrique quand la machine est couplée à une éolienne.

GB-A-2 054 975 décrit une machine électrique génératrice de courant pouvant être entraînée par une éolienne, cette machine comprenant un stator avec des enroulements statoriques ainsi qu'un rotor avec des enroulements rotoriques. Cette machine comprend de plus un contrôleur de fréquence relié aux enroulements d'un stator d'une excitatrice associée et un contacteur.

L'invention a pour objet d' améliorer le démarrage de la machine.

L'invention atteint cet objet en proposant une machine électrique selon la revendication 1 et un procédé selon la revendication 2.

A l'aide des figures schématiques ci-jointes on va décrire ci-après à simple titre d'exemple comment la présente invention peut être mise en oeuvre. Lorsqu'un même élément est représenté sur plusieurs figures il est désigné par des signes de référence identiques.
La figure 1 représente une machine selon l'invention.
La figure 2 représente un dispositif d'adaptation de la machine de la figure 1.

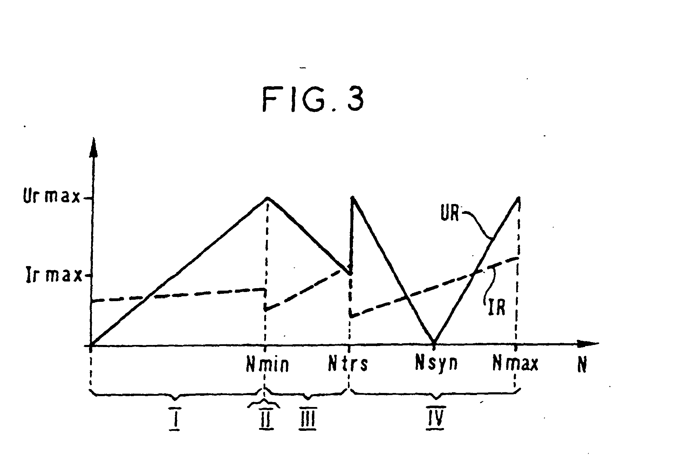

La figure 3 représente des diagrammes de variation d'un courant rotorique IR et d'une tension rotorique UR de cette machine en fonction de sa vitesse N portée en abscisses. Elle montre aussi la succession des modes de fonctionnement de cette machine.

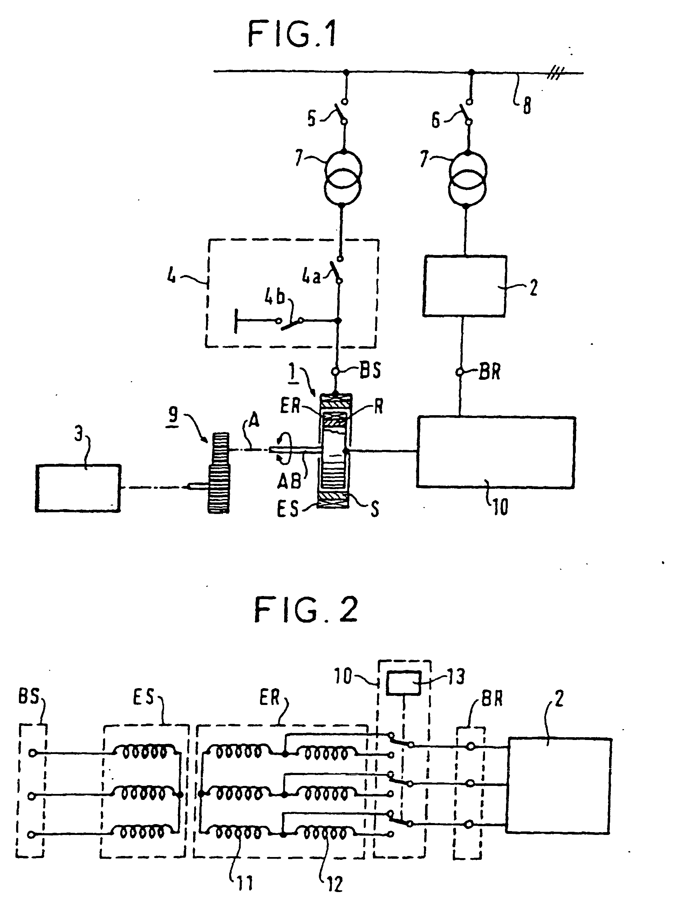

Conformément à la figure 1, une machine à double alimentation comprend essentiellement :
- un ensemble principal 1 ayant un axe A et constitué d'un stator S ayant des enroulements ES et d'un rotor R ayant des enroulements ER.
- un ensemble statorique constitué par un ensemble de contacteurs mécaniques ou statiques 4 pour court-circuiter les enroulements du stator ou les relier au réseau électrique 8 au travers d'organes de protection conventionnels tels que des disjoncteurs 5.
- un ensemble rotorique actif constitué par un convertisseur statique de fréquence 2 relié en sortie aux enroulements du rotor et en entrée au réseau électrique 8 au travers d'un organe de protection 6, et
- un transformateur 7 qui sert à adapter les tensions de la machine et du convertisseur à la tension du réseau électrique. La machine est destinée à être couplée par l'intermédiaire de son arbre AB à une charge mécanique 3 par l'intermédiaire d'un éventuel réducteur ou multiplicateur de vitesse 9. Undit dispositif d'adaptation est représenté en 10. Le stator et le rotor sont du type polyphasé, par exemple triphasé. Il est entendu que d'autre configurations sont possibles, comme par exemple un bobinage statorique composé de deux enroulements en triphasé, décalés de 30 degrés électriques, de couplage triangle ou étoile et un bobinage rotorique de couplage étoile ou tout autre arrangement, par exemple un bobinage rotorique diphasé.

Le convertisseur statique de fréquence 2 est du type onduleur source de tension ou onduleur source de courant ou encore cycloconvertisseur et peut comporter différents types de semiconducteurs: transistors, bipolaires ou IGBT ou d'un autre type; thyristors ou thyristors GTO, MCT. etc....

Les contacteurs 4a et 4b de l'ensemble 4 sont par exemple du type mécanique conventionnel et dans ce cas il est utile de prévoir un inter verrouillage interdisant le court-circuit des enroulements du stator simultanément à l'alimentation de ceux-ci par le réseau. Ils peuvent aussi être du type statique utilisant des thyristors avec commutation forcée ou des thyristors du type GTO ou tout autre semiconducteurs réalisant la fonction de fermeture et ouverture de circuits électriques.

Les contacteurs 4a,4b sont commandés par un circuit électronique (non représenté) de manière à être actionnés simultanément et en opposition pour court-circuiter les enroulements du stator ou les relier au réseau électrique 8 quand la machine atteint une vitesse prédéterminée particulière. De préférence, ces contacteurs sont du type statique lorsque la machine passe fréquemment par cette valeur prédéterminée particulière de vitesse de rotation au cours de son fonctionnement. Ils sont par exemple constitués de thyristors, les enroulements du stator étant du type triphasé. De même que les autres éléments de la machine, ils sont représentés en schéma unifilaire sur la figure 1. Ils peuvent être d'une autre nature, transistor par exemple, et être alors commandés en tout ou rien, c'est à dire à pleine ouverture ou bloqués ou encore ils peuvent être commandés avec un angle d'amorçage variable par rapport à la phase des ondes sinusoïdales du réseau ou de l'ensemble 1, permettant ainsi un réglage de la tension ou du courant statorique.

Le nombre de pôles dépend de la vitesse de la machine et des fréquences statorique et rotorique choisies en fonction du réseau d'alimentation et du type de convertisseur statique utilisé.
Les valeurs à donner au rapport de transformation de la machine sont déterminées, d'une part, par l'excursion totale de la vitesse de rotation mécanique autour de la vitesse de synchronisme, et d'autre part, par la tension de dimensionnement du convertisseur statique.

Le procédé de commande de la machine à double alimentation va être maintenant décrit.

Au démarrage de la machine, les enroulements du stator sont court-circuités par l'ensemble 4 (contacteur 4a à l'état ouvert non passant et contacteur 4b à l'état fermé passant). Les enroulements du rotor sont alimentés en tension par le réseau 8 au travers du convertisseur 2.

Cette première phase de fonctionnement de la machine, est appelée ci-aprés mode I.

Dans une seconde phase, appelée ci-après mode II, on supprime le court-circuit des enroulements du stator et on relie les enroulements du stator au réseau 8. Cette commutation est réalisée par les contacteurs de l'ensemble 4 (contacteur 4a amené à l'état fermé passant et contacteur 4b amené à l'état ouvert non passant). A cet effet, ces contacteurs sont commandés par une circuiterie électronique non représentée qui compare la vitesse de la machine à la vitesse prédéterminée particulière et qui est agencée aussi pour réaliser la commutation lors de la concordance de phase des tensions statoriques et du réseau aux fins de couplage. Quand les contacteurs sont du type statique, la commutation peut ne durer que quelques millisecondes.

Dans un mode III, après la commutation et la synchronisation du mode II, on diminue la fréquence du convertisseur pour augmenter la vitesse de la machine de la vitesse Nmin jusqu'à une vitesse Ntrs définie par le type de charge.

A la vitesse Ntrs on passe au mode IV. Pour cela on change un rapport de transformation interne à l'ensemble principal de la machine ou on ajoute un organe entre le réseau et le stator ou entre le rotor et le convertisseur de façon à changer le rapport de transformation de la machine vu par le convertisseur. Ceci a pour but d'adpter la puissance apparente du convertisseur aux tension et courant rotoriques correspondant à la puissance active rotorique consommée.

Puis on diminue la fréquence jusqu'à la vitesse nominale de la machine Nmax. La vitesse Ntrs est donc comprise entre Nmin et Nmax. Au passage par la vitesse de synchronisme Nsyn (fonction du nombre de pôles et de la fréquence du réseau) le rotor est alimenté par des courants continus. Dans les modes III et IV, le convertisseur statique impose au rotor une fréquence rotorique égale à la différence entre la fréquence du réseau et la fréquence correspondant à la vitesse de la machine.

Entre la vitesse Nmin et la vitesse Nsyn. le convertisseur renvoie dans le réseau 8 de l'énergie électrique dite de glissement de l'ensemble principal 1 par rapport à la vitesse Nsyn.

A la vitesse Nsyn, le convertisseur 2 alimente le rotor en courants continus.

Au delà de la vitesse Nsyn, le convertisseur 2 fournit de la puissance à la machine, par le rotor, et ceci proportionnellement au glissement par rapport à la vitesse Nsyn.

Le dispositif d'adaptation changeant le rapport de transformation vu du convertisseur peut être de différents types :
Il est soit interne à l'ensemble principal :
   - enroulements à nombre de spires variable au rotor ou au stator.
   - Changement du couplage étoile-triangle au stator ou au rotor.
soit externe à cet ensemble :
   - insertion ou suppression d'un autotransformateur ou transformateur entre le rotor et le convertisseur,
   - insertion ou suppression d'un autotransformateur ou transformateur entre le stator et le réseau.

Conformément à la figure 2, et à simple titre d'exemple, les enroulements statoriques ES et rotoriques ER sont du type triphasé. Les enroulements statoriques sont invariables. Le dispositif d'adaptation 10 de la machine permet de donner au groupe d'enroulements ER du rotor R une première et une deuxième configurations donnant respectivement une première valeur et une deuxième valeur au rapport de transformation de la machine.

Pour cela chacune des phases des enroulements rotoriques comporte deux bobines identiques 11 et 12. Un commutateur 13 commandé par la vitesse de la machine permet au convertisseur 2 d'alimenter soit les deux bobines en série, soit seulement la bobine 11, la bobine 12 étant alors placée en circuit ouvert. Le doublement ainsi réalisé du rapport de transformation de la machine apparaît particulièrement adapté au cas où l'arbre AB est couplé à une charge 3 dont le couple résistant est proportionnel au carré de la vitesse de la machine.

Il a été indiqué ci-dessus à titre d'exemple qu'un seul changement du rapport de transformation est réalisé à la vitesse Ntrs. On peut cependant utiliser plus de deux rapports de transformation, les changements se faisant à des vitesses successives comprises entre Nmin et Nmax. Ceci permet de réduire encore la taille du convertisseur.

Une variante du procédé décrit ci-dessus peut être réalisée en inversant le stator et le rotor. Le stator est alors alimenté par le convertisseur et le rotor est d'abord en court-circuit, puis couplé sur le réseau.

L'utilisation éventuelle d'un réducteur ou multiplicateur de vitesse mécanique permet dans tous les cas de positionner la vitesse de synchronisme Nsyn de façon optimale par rapport à la vitesse Nmax.

## Revendications

1. Machine électrique pour la fourniture d'énergie à un réseau électrique (8), cette machine électrique étant couplée à une éolienne et cette machine comprenant :
- un ensemble principal (1) ayant un axe (A) et constitué d'un stator (s) ayant des enroulements (ES) et d'un rotor (R) ayant des enroulements (ER),
- un ensemble statorique constitué par un ensemble de contacteurs (4) pour court-circuiter les enroulements (ES) du stator (S) dans un premier mode (I) au démarrage de la machine et pour relier les enroulements (ES) du stator (S) au réseau électrique (8) dans un autre mode, et
- un ensemble rotorique constitué par un convertisseur de fréquence (2) relié aux enroulements (ER) du rotor (R) et au réseau électrique (8).

2. Procédé de commande d'une machine électrique pour la fourniture d'énergie à un réseau électrique (8), cette machine électrique étant couplée à une éolienne et cette machine comprenant :
- un ensemble principal (1) ayant un axe (A) et constitué d'un stator (S) ayant des enroulements (ES) et d'un rotor (R) ayant des enroulements (ER),
- un ensemble statorique constitué par un ensemble de contacteurs (4), et
- un ensemble rotorique constitué par un convertisseur de fréquence (2) relié aux enroulements (ER) du rotor (R) et au réseau électrice (8), le procédé comprenant :
- les enroulements (ES) du stator (S) sont court-circuités dans un premier mode (I) au démarrage de la machine, et
- les enroulements (ES) du stator (S) sont relié au réseau électrique (8) dans un autre mode.

## Patentansprüche

1. Elektrische Maschine für die Lieferung von Energie an ein Stromnetz (8), wobei diese elektrische Maschine mit einer Windkraftanlage verbunden ist, und diese Maschine folgendes besitzt:
- eine Haupteinheit (1) mit einer Achse (A), die einen Stator (S) mit Wicklungen (ES) und einen Rotor (R) mit Wicklungen (ER) besitzt,
- eine Statoreinheit bestehend aus einem Satz Schalter (4), um die Wicklungen (ES) des Stators (S) in einem ersten Modus (I) beim Anfahren der Maschine kurzzuschließen und um die Wicklungen (ES) des Stators (S) in einem anderen Modus mit dem Stromnetz (8) zu verbinden, und
- eine Rotoreinheit, die aus einem Frequenzwandler (2) besteht, der mit den Wicklungen (ER) des Rotors (R) und mit dem Stromnetz (8) verbunden ist.

2. Regelverfahren für eine elektrische Maschine für die Lieferung von Energie an ein Stromnetz (8), wobei diese elektrische Maschine mit einer Windkraftanlage verbunden ist, und diese Maschine folgendes besitzt:
- eine Haupteinheit (1) mit einer Achse (A), die einen Stator (S) mit Wicklungen (ES) und einen Rotor (R) mit Wicklungen (ER) besitzt,
- eine Statoreinheit, die aus einem Satz Schalter (4) besteht, und
- eine Rotoreinheit, die aus einem Frequenzwandler (2) besteht, der mit den Wicklungen (ER) des Rotors (R) und mit dem Stromnetz (8) verbunden ist, wobei das Verfahren aus folgendem besteht :
- die Wicklungen (ES) des Stators (S) werden in einem ersten Modus (I) beim Anfahren der Maschine kurzgeschlossen und
- die Wicklungen (ES) des Stators (S) werden in einem anderen Modus mit dem Stromnetz (8) verbunden.

## Claims

1. Electrical machine for feeding energy to an electrical supply (8), said electrical machine being coupled to a wind turbine and said machine comprising:
- a main assembly (1) having an axis (A) and consisting of a stator (S) having windings (ES) and a rotor (R) having windings (ER),
- a stator assembly consisting of a set of switches (4) for short-circuiting the windings (ES) of the stator (S) in a first mode (I) on starting the machine and for connecting the windings (ES) of the stator (S) to the electrical supply (8) in another mode, and
- a rotor assembly consisting of a frequency converter (2) connected to the windings (ER) of the rotor (R) and to the electrical supply (8).

2. A method of controlling an electrical machine for supplying energy to an electrical supply (8), said electrical machine being coupled to a wind turbine and comprising:
- a main assembly (1) having an axis (A) and consisting of a stator (S) having windings (ES) and a rotor (R) having windings (ER),
- a stator assembly consisting of a set of switches (4), and
- a rotor assembly consisting of a frequency converter (2) connected to the windings (ER) of the rotor (R) and to the electrical supply (8), the method comprising:
- short-circuiting the windings (ES) of the stator (S)in a first mode (I) on starting the machine, and
- connecting the windings (ES) of the stator (S) to the electrical supply (8) in another mode.
